# EUROPEAN PATENT SPECIFICATION

(11) **EP 2 266 927 B1**
(45) Date of publication and mention of the grant of the patent: **02.10.2013**
(21) Application number: 10006558.0
(22) Date of filing: 23.06.2010
(51) Int. Cl.: C04B 24/26, C04B 24/28, C04B 40/00, C08F 283/00, C08F 290/06

(54) **Polymer for ultra-high strength concrete admixture and method for preparing the same**
Polymer für ein ultrahochfestes Betonzusatzmittel und Herstellungsverfahren dafür
Polymère pour adjuvant de béton ultra résistant et son procédé de préparation

(30) Priority: 23.06.2009 KR 20090055767
(43) Date of publication of application: 29.12.2010
(73) Proprietor: Silkroad C&T Co., LTD, Seoul 137-863 (KR)
(72) Inventor: Cha, Cheol Yong, Maeul Seoku-dong Hwaseong-si Gyeonggi-do 445-170 (KR); Park, Kwang Young, Giheung-gu Yongin-si Gyeonggi-do 446-909 (KR); Choi, Young Gook, Seobuk-gu Cheonan-si Chungcheongnam-do 331-778 (KR); Kim, Oh Jin, Gunmun-dong Pyeongtaek-si Gyeonggi-do 450-706 (KR); Jang, Myung Wook, Yeonil-eup Nam-gu Pohang-si Gyeongbuk 790-763 (KR)
(74) Representative: Körfer, Thomas

(56) References cited:
- EP-A1- 1 437 330
- US-A1- 2004 030 007
- US-B1- 6 376 581

## Description

### BACKGROUND OF THE INVENTION

### Field of the Invention

The present invention relates to a novel polymer for ultra-high strength concrete admixture, and more specifically, to a polymer for ultra-high strength concrete admixture, prepared from 30 to 95% by weight of an unsaturated (meth)polyoxyalkylene urethane compound (a) and 5 to 70% by weight of an unsaturated anionic organic monomer (b), and a method for preparing the same.

More specifically, the present invention relates to a novel polymer for ultra-high strength concrete admixture suitable for use in ultra-high strength concrete, in that the polymer has both high water-reducing ability, an advantage of polycarboxylic acid polymer admixtures, and defoaming capability in proportion to the content of urethane derivatives present in side chains, thus improving workability and strength of the concrete composition without using any defoaming agent, and a method for preparing the same.

### Description of the Related Art

Polycarboxylic acid-based polymer concrete admixtures are generally used as water-reducing agents and plasticizers for concrete compositions such as cement pastes, mortar and concrete, which are required for concrete compositions to form structural materials for civil engineering and construction.

Such a polycarboxylic acid polymer concrete admixture improves fluidity of concrete compositions and thus considerably decreases the amount of water required, thus advantageously improving strength and durability of civil engineering and construction structures. Such a polycarboxylic acid polymer concrete admixture exhibits high water-reducing ability and fluidity, as compared to conventional lignin sulfonate admixtures or polynaphthalene sulfonate admixtures and is thus commonly used as a high-performance concrete admixture.

However, an increase in population and geographic limitations of contemporary society have brought about the necessity for skyscrapers, and concrete compositions requiring high strength and durability, which are referred to as ultra-high strength concrete compositions. A high-performance admixture with high water-reducing ability is used as an ultra-high strength concrete admixture to prepare such an ultra-high strength concrete composition. A generally used ultra-high strength concrete admixture is a copolymer of unsaturated carboxylic acid and unsaturated polyalkylene glycol ester which has a disadvantage of considerably deteriorated workability due to high water-reducing ability and low water/cement ratio. Accordingly, there is a need for novel ultra-high strength concrete admixtures.

As to polycarboxylic acid concrete admixtures, Japanese Patent Publication No. 10-0003085 discloses a polycarboxylic acid concrete admixture which is prepared from 20 to 60 mol% of an alkyl (meth)acrylate monomer and 15 to 40 mol% of polyalkylene glycol unsaturated monomer and comprises a polymer having a weight average molecular weight of 20,000 or less.

US 2004/030007 A1 appears to relate to the technical field of mortars, concretes and other compositions based on cement. Having said this, one of several differences between the present invention and US 2004/030007 A1 is that in the present invention, a diol is required to prepare novel compound (a) of formula (I) as disclosed herein. In contrast, in US 2004/030007 A1 a diol is not employed. Accordingly, the product of the present invention is clearly different from that of US 2004/030007, which is also silent about the molecular weight. One further difference for instance is that it appears US 2004/030007 A1 must also include at least one non-ionic monomer.

US 6,376,581 and EP 1 437 330 A1 both appear to relate to the field of cement dispersants. Having said this, amongst other things neither utilize a diol as per the present invention in order to prepare novel compound (a) of formula (I) as disclosed herein. Thus, the present invention is also clearly different from that of both US 6,376,581 and EP 1 437 330 A1.

In addition, Japanese Patent Publication No. Sho. 59-18338 discloses a cement dispersant prepared by copolymerization of poly alkylene glycol mono(meth)acrylate ester monomers and (meth)acrylic acid monomers. The cement dispersant disclosed in the patent documents has polyalkylene glycol chains which are non-ionic hydrophilic groups and anionic carboxylic acid groups in the respective molecules, involves hydrophilicity of electrons and steric hindrance, inhibiting aggregation adsorption of cement particles, and exhibits low cement hardening-delay effects but good dispersibility.

Moreover, US Patent No. 5,661,206 suggests use of copolymers of a polycarboxylic acid monomer mixture and copolymers of alkoxy polyalkylene glycol mono(meth)acrylic acid ether monomers and polycarboxylic acid monomers as plasticizers to increase fluidity of cement slurry and solve the undesired slump decrease with the passage of time.

In addition, JP Patent Publication No. 2003-0065580 discloses use of unsaturated polyethyleneimine ethylene oxide(EO) adduct monomers wherein unsaturated bonds as unsaturated organic acid are incorporated into a polyethyleneimine-ethylene oxide adduct and organic acid monomers and unsaturated organic acid monomers for ultra-high strength concrete admixtures to improve water-reducing ability and workability of concrete compositions.

As such, incorporation of a combination of polyalkylene glycol mono (meth)acrylate/(meth)acrylic acid copolymers, polyalkylene glycol mono alkyl ether/maleic acid copolymers and polyethyleneimine EO adduct/unsaturated organic acid copolymers as an admixture in a cementeous mixure is disclosed in the documents of the art.

However, the concrete admixtures disclosed in the patent documents exhibit high water-reducing ability, but disadvantageously entail low workability of a concrete composition at low water/cement ratio. In addition, these concrete admixtures comprise a small amount of defoaming agent to uniformize foams of concrete compositions. This defoaming agent is hydrophobic, which is different from the admixture, thus causing phase separation therebetween.

In order to solve the afore-mentioned problems, the present invention incorporates novel monomers to provide urethane polymers applicable to concrete admixtures which can exhibit superior water-reducing ability, considerably improve workability even upon use of a low water/cement ratio and have uniform foams owing to superior foaming ability without adding any defoaming agent, and a method for preparing the urethane polymers. The urethane polymers may be applied to concrete and other industrial fields and are expected to have infinite potential applicability.

### SUMMARY OF THE INVENTION

As described herein, the object underlying the present invention is preferably to be accomplished by means of the independent claims as attached. The dependent claims advantageously illustrate further preferred aspects of the inventive embodiments.

Accordingly, the present invention is directed to a polymer for ultra-high strength concrete admixture and a method for preparing the same that substantially obviate one or more problems due to limitations and disadvantages of the related art.

It is one object of the present invention to provide a polymer for an ultra-high strength concrete admixture to which a novel organic compound exhibiting superior water-reducing ability, improved workability and foamability and being capable of considerablely improving durability of concrete structures is applied.

To achieve the object and other advantages and in accordance with the purpose of the invention, as embodied and broadly described herein, provided is a polymer for ultra-high strength concrete admixture, prepared from 30 to 95% by weight of an unsaturated (meth)polyoxyalkylene urethane compound (a) represented by Formula I below: 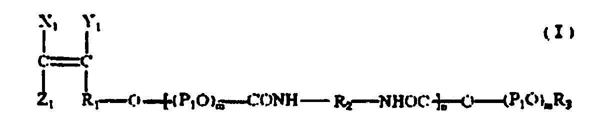 wherein X₁, Y₁ and Z₁, are each independently identical or different and are selected from the group consisting of hydrogen (-H), a methyl group (-CH₃) and a carboxylic group (-COOH); R₁, represents a C₁-C₆ hydrocarbon group or a ketone group; R₂ represents a C₆ aromatic group, a C₃-C₁₂ cyclic hydrocarbon group or a C₁-C₆ hydrocarbon group; R₃ represents hydrogen (-H) or a C₁-C₆ hydrocarbon group; P₁O represents at least one C₂-C₂₀ oxyalkylene group; m is an integer of 2 to 100, which is an average adduct mole number of the oxyalkylene group; and n is an integer of 3 to 150, which is an average adduct mole number of repeat units, and 5 to 70% by weight of an unsaturated anionic organic monomer (b) represented by Formula II below: 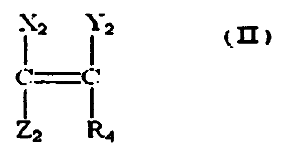 wherein X₂, Y₂ and Z₂ are each independently identical or different and are selected from the group consisting of hydrogen (-H), a methyl group (-CH₃) and a carboxylic group (-COOH), in which one of X₂, Y₂ and Z₂ is hydrogen; and R₄ represents a carboxylic group (-COOH) or a nitrile group (-CN).

Said compound (a) being obtainable by the urethane derivative and a diol which are added to obtain a urethane compound and the resulting urethane compound is reacted with unsaturated organic acid or unsaturated alcohol.

In accordance with another aspect of the present invention, provided is a concrete admixture, comprising the polymer according to the present invention.

In accordance with another aspect of the present invention, provided is a method for preparing a polymer for concrete admixture comprising: i) charging a solvent into a reactor; ii) dropwise adding at least one unsaturated (meth)polyoxyalkylene urethane compound (a) represented by the following Formula I, at least one unsaturated anionic organic monomer (b) represented by the following Formula II:

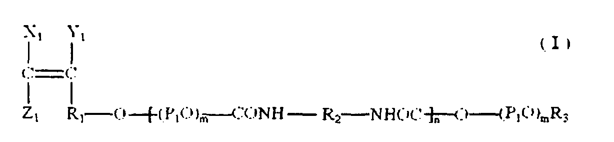

wherein X₁, Y₁, and Z₁, are each independently identical or different and are selected from the group consisting of hydrogen (-H), a methyl group (-CH₃) and a carboxylic group (-COOH); R₁, represents a C₁-C₆ hydrocarbon group or a ketone group; R₂ represents an aromatic group, a cyclic hydrocarbon group or a C₁-C₆ hydrocarbon group; R₃ represents hydrogen (-H) or a C₁-C₆ hydrocarbon group; P₁O represents at least one C₂-C₂₀ oxyalkylene group; m is an integer of 2 to 100, which is an average adduct mole number of the oxyalkylene group; and n is an integer of 3 to 150, which is an average adduct mole number of repeat units, and

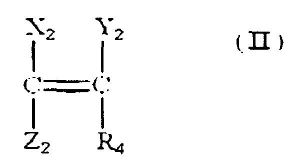

wherein X₂, Y₂ and Z₂ are each independently identical or different and are selected from the group consisting of hydrogen (-H), a methyl group (-CH₃) and a carboxylic group (-COOH), in which one of X₂, Y₂ and Z₂ is hydrogen; and R₄ represents a carboxylic group (-COOH) or a nitrile group (-CN); and iii) polymerizing the resulting reaction mixture.

In accordance with another aspect of the present invention, provided is a method for preparing a polymer for concrete admixture comprising: i) charging at least one compound or monomer of at least one unsaturated (meth)polyoxyalkylene urethane compound (a) represented by the following Formula I, and at least one unsaturated anionic organic monomer (b) represented by the following Formula II together with a solvent into a reactor;

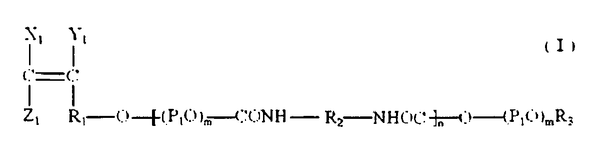

wherein X₁, Y₁, and Z₁, are each independently identical or different and are selected from the group consisting of hydrogen (-H), a methyl group (-CH₃) and a carboxylic group (-COOH); R₁ represents a C₁-C₆ hydrocarbon group or a ketone group; R₂ represents an aromatic group, a cyclic hydrocarbon group or a C₁-C₆ hydrocarbon group; R₃ represents hydrogen (-H) or a C₁-C₆ hydrocarbon group; P₁O represents at least one C₂-C₂₀ oxyalkylene group; m is an integer of 2 to 100, which is an average adduct mole number of the oxyalkylene group; and n is an integer of 3 to 150, which is an average adduct mole number of repeat units, and

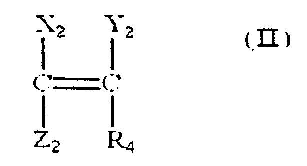

wherein X₂, Y₂ and Z₂ are each independently identical or different and are selected from the group consisting of hydrogen (-H), a methyl group (-CH₃) and a carboxylic group (-COOH), in which one of X₂, Y₂ and Z₂ is hydrogen; and R₄ represents a carboxylic group (-COOH) or a nitrile group (-CN); ii) dropwise adding the remaining compound or monomer and a polymerization initiator (C) to the reactor; and iii) polymerizing the resulting reaction mixture.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and along with the description serve to explain the principle of the invention. In the drawings:

FIG. 1 is a graph showing total organic carbon of the polymers prepared in Examples 2 to 4 and Comparative Examples 2 to 4, and in the graph, (a) shows a polymer (S-2) prepared in Example 2, (b) shows polymer (S-4) prepared in Example 4, (c) shows polymer (C-2) prepared in Comparative Example 2, (d) shows polymer (C-4) prepared in Comparative Example 4;

FIG. 2A is an TEM image of the polymer prepared in Example 4; and

FIG. 2B is an TEM image of the polymer prepared in Comparative Example 4.

FIG. 2C is an TEM image of the polymer prepared in Comparative Example 6.

### DETAILED DESCRIPTION OF THE INVENTION

Hereinafter, the present invention will be described with reference to the annexed drawings.

The unit "% by weight" used herein refers to a weight ratio of the polymer for ultra-high strength concrete admixture calculated based on the total weight of unit monomers, unless otherwise mentioned.

The present invention is directed to a polymer for an ultra-high strength concrete admixture, obtained by polymerizing two or more mixtures or monomers, that is, (a) at least one unsaturated (meth)polyoxyalkylene urethane compound and (b) at least one unsaturated anionic organic monomer or a compound containing the same together with (c) a polymerization initiator, and a method for preparing the same.

In addition, the present invention provides a concrete admixture comprising the polymer for ultra-high strength concrete admixture.

The polymer for ultra-high strength concrete admixture may be a two-component copolymer. Alternatively, the polymer may be copolymerized together with other monomers so long as the afore-mentioned two compounds or monomers are copolymerized. That is, the polymers are not particularly limited to two-component copolymers and, in addition to the afore-mentioned two compounds and monomers, may be copolymerized together with other copolymerizable monomers.

The two compounds (a) or monomers (b) may be used alone or in combination thereof.

In the case where the polymer for ultra-high strength concrete admixture is obtained by copolymerization with other monomers, the two compounds (a) and monomers (b) are preferably main ingredients. The polymer for ultra-high strength concrete admixture comprising the compounds (a) or monomers (b) is a polymer having a structure wherein (meth)polyoxyalkylene urethane as a side chain is bound to a main chain, that is, a polymer containing (meth)polyoxyalkylene urethane in a side chain thereof.

The polymer for ultra-high strength concrete admixture prepared from the monomer ingredients imparts dispersibility to a concrete composition due to hydrophilicity and steric hindrance of (meth)polyoxyalkylene, a non-inonic hydrophilic group, derived from an unsaturated (meth)polyoxyalkylene urethane compound (a) represented by Formula I and uniformizes the foam size of cement composition induced from the lyphophilic groups contained in the urethane groups. In addition, the concrete admixture comprising the polymer is readily absorbed by cement particles in the concrete composition due to a hydrophilic anionic group derived from the unsaturated anionic organic monomer (b) represented by Formula II.

The polymer for ultra-high strength concrete admixture is prepared from (a) 30 to 95% by weight of at least one unsaturated (meth)polyoxyalkylene urethane compound and (b) 5 to 70% by weight of at least one unsaturated anionic organic monomer.

Said compound (a) being obtainable by the urethane derivative and a diol which are added to obtain a urethane compound and the resulting urethane compound is reacted with unsaturated organic acid or unsaturated alcohol.

The polymer for concrete admixture has a weight average molecular weight (Mw) of 5,000 to 150,000. When the weight average molecular weight is lower than 5,000 or is higher than 150,000, the polymer may exhibit insufficient dispersion maintenance with the passage of time of cement and concrete composition or insufficient workability. More preferably, the weight average molecular weight is 10,000 to 100,000. The polymer having a weight average molecular weight of 10,000 to 100,000 can secure dispersion maintenance with the passage of time and workability of cement and concrete composition.

The weight average molecular weight of the concrete admixture polymer is measured through gel permeation chromatography (hereinafter, referred to as "GPC") and is expressed in polyethylene glycol equivalants. Preferably, the weight average molecular weight is measured under the following GPC measurement conditions.

GPC molecular weight measurement conditions

Column: Waters Ultrahydrogel Linear + Ultrahydrogel 120PKGD

Eluent: solution of 5g of sodium nitrate in 1,000g of water

Flow rate of eluent: 0.8 mL/min

Column temperature: 40°C

Standard sample: Poly Ethylene Glycol; peak-top molecular weight (Mp): 272500, 219300, 85000, 46000, 24000, 12600, 4250, 7100, 1470

Detector: Waters differential refractive index detector

Hereinafter, monomers of the polymer for ultra-high strength concrete admixture and compounds constituting the monomer ingredients will be described in detail.

**(1) unsaturated (meth)polvoxvalkylene urethane compound (a)**

One monomer ingredient constituting the polymer for the ultra-high strength concrete admixture, a unsaturated (meth)polyoxyalkylene urethane compound (a), contains a polymerizable unsaturated group, a urethane derivative and an oxyalkylene chain, which is linked by urethane bonds, and is represented by Formula (I) below:

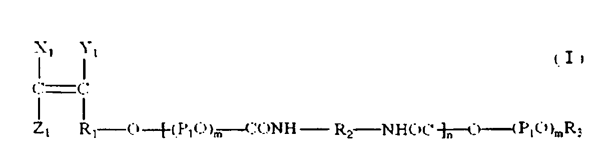

wherein X₁, Y₁ and Z₁ are each independently the same or different and are selected from the group consisting of hydrogen (-H), a methyl group(-CH₃) and a carboxylic group (-COOH);

R₁ represents a C₁-C₆ hydrocarbon group or a ketone group;

R₂ represents a C₆ aromatic group, a C₃-C₁₂ cyclic hydrocarbon group or a C₁-C₆ hydrocarbon group;

R₃ represents hydrogen (-H) or a C₁-C₆ hydrocarbon group;

P₁O represents at least one C₂-C₂₀ oxyalkylene group;

m is an integer of 2 to 100, which is an average adduct mole number of an oxyalkylene group; and

n is an integer of 1 to 50, which is an average adduct mole number of repeat units.

The unsaturated (meth)polyoxyalkylene urethane compound (a) contains a polyoxyalkylene-urethane derivative chain having an average adduct mole number of 1 to 50. Preferably, the unsaturated (meth)polyoxyalkylene urethane compound (a) has an average adduct mole number of 3 to 30 so that it can exert desired functions.

In the Formula I, the oxyalkylene group represented by P₁O is at least one C₂-C₂₀ alkylene oxide adduct. Such an alkylene oxide adduct is prepared from at least one alkylene oxide such as ethylene oxide, propylene oxide, butylene oxide or iso-butylene oxide.

The at least one oxyalkylene may be present in the same unsaturated (meth)polyoxyalkylene urethane compound (a) by an addition method such as random addition, block addition and alternative addition. When P₁O is composed of two or more oxyalkylene groups, these oxyalkylene groups may be added in the form of blocks or randomly added.

The average adduct mole number m of the oxyalkylene represented by P₁O is preferably an integer of 2 to 100. When m is less than 2, chain flexibility is deteriorated and steric hindrance sufficient to disperse cement particles cannot be thus obtained, or hydrophilicity of the oxyalkylene group may be insufficient. The range of m in the oxyalkylene, (P₁O)ₘ, that is, the average adduct mole number of the oxyalkylene group, is more preferably 6 to 50.

For example, the compound represented by Formula (I) may be an unsaturated organic acid-polyoxyalkylene urethane adduct. The unsaturated organic acid-polyoxyalkylene urethane adduct may have a structure wherein a polyoxyalkylene urethane is added to a chain organic acid containing an unsaturated group.

For a method for preparing the compouned represented by Formula (I), addition of unsaturated organic acid-polyoxyalkylene urethane may be explained by the following Reaction Scheme in brief.

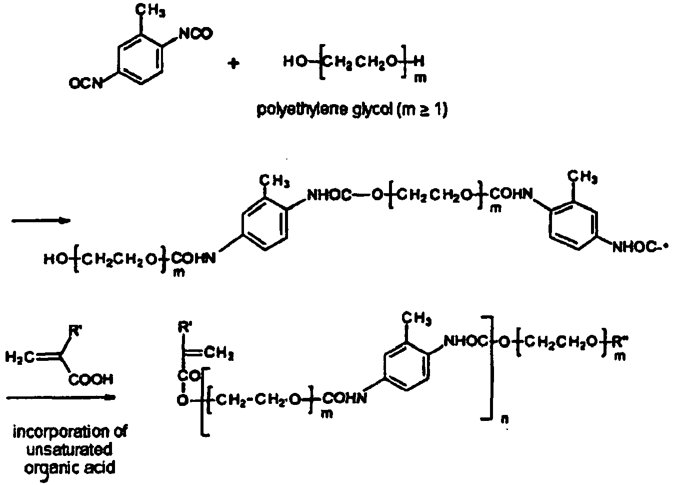

In the Reaction Scheme, R" is hydroxide (-OH), or C₁-C₆ oxyhydrocarbon.

As can be seen from the Reaction Scheme above, in order to prepare unsaturated organic acid-polyoxyalkylene urethane adduct, the urethane derivative and a diol are added to obtain a urethane compound and the resulting urethane compound is reacted with unsaturated organic acid or unsaturated alcohol.

The urethane derivative used for the preparation of the unsaturated organic acid-polyoxyalkylene urethane adduct may be a diisocyanate derivative having aromatic hydrocarbon, cyclic hydrocarbon or linear hydrocarbon. More specifically, examples of diisocyanate derivatives having an aromatic, cyclic or linear hydrocarbon group include 2,4-toluene diisocyanate, methylenediphenyl-4,4'-diisocyanate, tetramethyl-1,3-xylene diisocyanate, para-phenylene diisocyanate, 1,6-hexamethylene diisocyanate, 1,5-naphthalene diisocyanate, isoporon diisocyanate or cyclohexylmethane diisocyanate, but are not limited thereto.

In addition, examples of diols include polyethylene glycol, propylene glycol and butylene glycol isobutylene glycol.

Examples of unsaturated organic acids used for the reaction include monocarboxylic acid such as acrylic acid or methacrylic acid; and maleic acid, itaconic acid, citraconic acid or fumaric acid, and mono-valent metal salts, bi-valent metal salts, ammonium salts or organic amine salts thereof and dicarboxylic acid such as anhydrides thereof. Examples of suitable unsaturated alcohols include vinyl alcohol, (meth)allyl alcohol, 3-buten-1-ol isoprene alcohol, 3-methyl-2-buten-1-ol, 2-methyl-3-buten-1-ol, 2-methyl-3-buten-2-ol and 2-methyl-2-buten-1-ol.

In the polymer for ultra-high strength concrete admixture, units derived from the unsaturated (meth)polyoxyalkylene urethane compound (a) are present in an amount of 30 to 95 % by weight, perferably 40 to 95 % by weight. When the unit derived from the unsaturated (meth)polyoxyalkylene urethane compound (a) is less than 30 % by weight, the water-reducing ability and workability of the concrete composition cannot be sufficiently improved.

The unsaturated organic acid-polyoxyalkylene urethane adduct is a non-ionic hydrophilic compound which contains a hard portion such as a urethane derivative group and a soft portion such as polyethylene glycol. The portions derived from the urethane adduct are present as side chains in the polymer for concrete admixture.

**(2) Unsaturated anionic organic monomer (b)**

Any monomer may be used as the unsaturated anionic organic monomer (b) so long as it can form polymerizable unsaturated groups and anionic groups. For example, preferred is an unsaturated carboxylic acid monomer.

The unsaturated anionic organic monomer (b) may be represented by Formula II below:

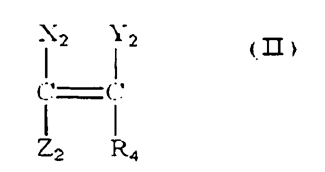

wherein X₂, Y₂ and Z₂ are each independently the same or different and are selected from the group consisting of hydrogen (-H), a methyl group (-CH₃) and a carboxylic group (-COOH), in which one of X₂, Y_{Z} and Z₂ is hydrogen; and R₄ represents a carboxylic group (-COOH) or a nitrile group (-CN).

For example, the unsaturated anionic organic monomer is selected from the group consisting of unsaturated mono carboxylic acid monomers, unsaturated dicarboxylic acid monomers and unsaturated nitrile monomers.

The unsaturated monocarboxylic acid monomer may be selected from monomers which have one unsaturated group and a functional group capable of forming carboxylic acid anions in the molecule. Examples of the unsaturated monocarboxylic acid monomer include acrylic acid and methacrylic acid, but are not limited thereto.

The unsaturated monocarboxylic acid monomer may be selected from monomers which have one unsaturated group and two functional groups capable of forming carboxylic anions in the molecule. Examples of the unsaturated dicarboxylic acid monomers include: maleic acid, itaconic acid, citraconic acid, fumaric acid; and mono-valent metal salts, bi-valent metal salts, ammonium salts or organic amine salts thereof; anhydrides thereof, but are not limited thereto.

The unsaturated nitrile monomer may be selected from monomers which have one unsaturated group and a nitrile group. Examples of unsaturated nitrile monomers include acrylonitrile, but are not limited thereto.

In the polymer for ultra-high strength concrete admixture, the unsaturated anionic organic monomer (b) is present in an amount of 5 to 70% by weight, preferably, 5 to 60% by weight. When the unsaturated anionic organic monomer (c) is present in an amount less than 5% by weight, the polymer cannot be sufficiently absorbed to cement particles. When the monomer (c) exceeds 60% by weight, concrete cannot exsert dispersance maintenance with the passage of time.

The unit monomers constituting the polymer for ultra-high strength concrete admixture may further include a third monomer ingredient as well as the afore-mentioned two compounds or monomers (a and b). The third ingredient may be present in an amount of 0 to 30% by weight, if used.

**(3) Polymerization initiator (c)**

The polymer for ultra-high strength concrete admixture is prepared by polymerizing the afore-mentioned two compounds and monomers (a, b) together with a polymerization initiator (c).

Preferably, the polymerization initiator is persulfate, hydrogen peroxide, benzoyl peroxide, an azo compound, diacyl peroxide, or alkyl hydroperoxide. The polymerization initiator may be used alone or in combination thereof.

In the preparation of the polymer, the amount of the polymerization initiator may be determined according to a method known in the art.

**(4) Other ingredients (d)**

In addition, a reducing agent may be further used as an accelerator. As a reducing agent, sodium hydrogen sulfite, sodium sulfite, formaldehyde sodium sulfoxylate, potassium persulfate or ascorbic acid may be used in combination with amines such as ethylene diamine, sodium ethylene diamine tetra acetate and glycine. The amount of the reducing agent may be suitably controlled according to a method known in the art.

If necessary, a chain transfer agent may be used singly or in combination thereof. The amount of the chain transfer agent may be suitably controlled by those skilled in the art.

Hereinafter, a method for preparing the polymer for concrete admixture by copolymerizing the two compounds or monomers (a and b) with the polymerization initiator (c) will be illustrated in detail.

**Method for Preparing polymer for ultra-high strength concrete admixture**

The present invention provides a method for preparing the polymer for ultra-high strength concrete admixture by copolymerizing the two monomers (a and b) together with the polymerization initiator (c).

The preparation method of the polymer may be solution or bulk polymerization.

The polymerization may be carried out in a batch continuous or semi-continuous manner.

Non-limiting examples of the solvent used for polymerization include water, alcohols, aromatic organic compounds, esters and ketones and the like. Specific examples include methyl alcohol, ethyl alcohol, isopropyl alcohol, benzene, toluene, cyclohexane, xylene, n-heptane, ethyl acetate, acetone and methyl ethyl ketone. The solvent may be used alone or in combination thereof.

In the process of the afore-mentioned polymerization, charging monomer ingredients and a polymerization initiator into a reactor may be selected from: a process which comprises charging all monomers into the reactor and dropwise adding a polymerization initiator thereto; a process comprising charging a portion of monomer ingredients into the reactor and adding a polymerization initiator and the remaining monomers thereto; and a process comprising charging a polymerization solvent into the reactor and dropwise adding the total amount of the monomers and the polymerization initiator thereto.

Preferably, the polymerization may be carried out by: continuously dropwise adding a polymerization initiator and monomer ingredients to a reactor; continuous polymerization, followed by secondary batch-type polymerization; or batch-type polymerization, followed by secondary continuous polymerization. The reason for using the polymerization method is that the method uniformizes the molecular weight of the final polymer, and increases the water-reducing ability and fluidity of a cement and concrete composition comprising the polymer as an admixture, thus improving dispersion-maintenance ability therein.

Specifically, the method for preparing the polymer for ultra-high strength concrete admixture comprises:

i) charging a solvent into a reactor;

ii) dropwise adding at least one unsaturated (meth)polyoxyalkylene urethane compound (a) represented by Formula (I), at least one unsaturated anionic organic monomer (b) represented by Formula (II), and the polymerization initiator (c) to the reactor; and

iii) polymerizing the resulting reaction mixture.

Alternatively, the method comprises:

i) charging at least one compound or monomer of at least one unsaturated (meth)polyoxyalkylene urethane compound (a) represented by Formula (I), and at least one unsaturated anionic organic monomer (b) represented by Formula (II) together with a solvent into a reactor;

ii) dropwise adding the remaining compound or monomer and a polymerization initiator (C); and

iii) polymerizing the resulting reaction mixture.

The method for preparing the polymer for ultra-high strength concrete admixture may further comprise neutralizing the resulting polymer with an alkali. The alkali may be selected from mono-valent and di-valent metal hydroxides, chlorides, ammonia and organic amines.

The polymerization may be carried out using, in addition to the polymerization initiator (c), at least one accelerator (d). The accelerator (d) may be a reducing agent. The reducing agent has been mentioned above and is thus omitted.

If necessary, a chain transfer agent may be used and may be used alone or in combination thereof. The chain transfer agent may be suitably selected from those known in the art.

The polymerization conditions including temperature may be suitably determined depending on polymerization methods, solvents, polymerization initiators and chain transfer agents. Generally, the polymerization temperature is 40°C to 180°C. Specifically, the polymerization temperature is 60°C to 100°C. The polymerization time is about one hour to about 24 hours. Specifically, the polymerization time is 2 to 12 hours.

The concrete admixture comprising the polymer for ultra-high strength concrete admixture is used after adding one concrete admixture to a concrete composition, or adding two or more concrete admixtures to a concrete composition. Preferably, the concrete admixture may be used in combination with another concrete admixture with high water-reducing ability.

For example, the concrete admixture with high water-reducing ability may be a concrete admixture inherently containing a polymer for ultra-high strength concrete admixture having long urethane derivative-polyethylene glycol chains (three or more moles). The monomer to form the polymer for ultra-high strength concrete admixture comprises, as essential ingredients, an unsaturated (methoxy)polyoxyalkylene urethane compound and an organic acid monomer containing unsaturated carboxylic acid groups. The urethane derivative-polyethylene glycol chains have a length of 3 or more moles, more preferably, 6 to 150 moles, still more preferably, 10 to 100 moles.

The polymer for concrete admixture of the present invention enables high absorption speed on the surface of cement particles even under strong alkaline conditions in a concrete slurry due to a high amount of anionic absorption groups in the polymer main chains, secures superior water-reducing ability and workability, since (meth)polyoxyalkylene urethane derivatives of the polymer side chains maintain steric hindrance, and enables control of air amount of the concrete composition without using any deforming agent, owing to deforming ability in proportion to the mole number of urethane derivatives in the concrete composition. Accordingly, it is possible to easily control fluidity of ultra-high strength concrete with high strength and superior durability. Specifically, the polymer exhibits high water-reducing ability, and at the same time, improves workability upon concrete pouring owing to the increased water-reducing ability even at a low water/cement ratio, and enables easy control of air amount of the concrete composition without using any defoaming agent, thus efficiently preventing concrete frost damage. Accordingly, deterioration in strength of the resulting concrete and material separation can be prevented by increasing a water/cement ratio or adding excess plasticizer. Also, constructability can be improved in slurry phase, and strength and durability of ultra-high strength concrete can be improved.

**Examples**

Now, the present invention will be described in more detail with reference to the following examples. These examples are provided only for illustrating the present invention, they are not intended to limit the subject matter of the invention thereto.

**Preparation of unsaturated poly (meth)oxyethylene urethane compound**

26g of 2,4-toluene diisocyanate, 0.02g of dibutyltin dilaurate, 120g of polyethyleneglycol (average adduct mole number of ethyleneoxide: 6) were charged into a 1L glass reactor provided with a thermometer, a stirrer, a dropping funnel, a nitrogen induction pipe and a reflux condenser, and the reactor was purged with nitrogen while stirring and was heated to 60°C under nitrogen atmosphere. After stirring for three hours, 18g of methacrylic acid, a small amount of phenothiazine and a predetemined amount of cyclohexane as a recycle solvent were charged into the reactor through a dropping funnel. Then, the reaction was carried out at 100°C for 12 hours. When the reaction was finished, the recycle solvent was removed at 80°C by evaporation under reduced pressure to prepare a poly (meth)oxyethylene urethane compound having unsaturated groups (the mole number of urethane derivative-oxyethylene added: 6).

An unsaturated poly (meth)oxyethylene urethane compound wherein the mole number of urethane derivative-oxyethylene is 10, 18, 25 or 45 was prepared in the same manner as mentioned above.

**Example 1**

285g of distilled water was charged into a 1L glass reactor provided with a thermometer, a stirrer, a dropping funnel, a nitrogen induction pipe and a reflux condenser. The reactor was purged with nitrogen, while stirring, and was heated to 80°C under nitrogen atmosphere. Then, a solution consisting of 270g of the unsaturated poly (meth)oxyethylene urethane compound (a) (mole number of urethane derivative-oxyethylene added: 6) prepared by the reaction, 55g of acrylic acid and 50g of distilled water was dropwise added to the reactor over 5 hours. At the same time, an aqueous solution of 0.85g of ammonium persulfate in 50g of water was added to the reactor dropwise over 6 hours.

After dropwise addition, the reaction mixture was allowed to stand at 80°C for one hour. In addition, the reaction mixture was adjusted to pH 6 using sodium hydroxide to obtain a polymer for ultra-high strength concrete admixture (S-1) having a weight average molecular weight of 31,000, based on polyethylene glycol equivalents (measured by gel permeation chromatography) and having a structure represented by the following Formula (confirmed by ¹H NMR analysis):

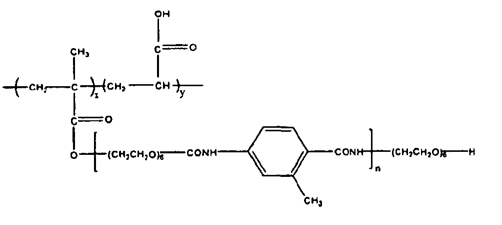

wherein x and y are an integer of 1 or more, n is an integer of 3 or more, and an average mole number of oxyethylene present in a compound repeat unit is 6.

**Examples 2 to 5**

Polymers for an ultra-high strength concrete admixture (S-2) to (S-5) were prepared in the same manner as Example 1 using monomer compositions as set forth in Table 1 below.

**Comparative Example 1**

285g of distilled water was charged into a 1 L glass reactor provided with a thermometer, a stirrer, a dropping funnel, a nitrogen induction pipe and a reflux condenser. The reactor was purged with nitrogen, while stirring, and was heated to 80°C under nitrogen atmosphere. Then, a solution consisting of 270g of unsaturated poly methoxy polyethyleneglycol monomethacrylate (mole number of oxyethylene added: 6), 55g of acrylic acid and 50g of distilled water was added to the reactor dropwise over 5 hours. At the same time, an aqueous solution of 0.85g of ammonium persulfate in 50g of water was added to the reactor dropwise over 6 hours.

After dropwise addition, the reaction mixture was allowed to stand at 80°C for one hour. In addition, the reaction mixture was adjusted to pH 6 using sodium hydroxide to obtain a polymer for ultra-high strength concrete admixture (C-1) having a weight average molecular weight of 27,000, based on polyethylene glycol equivalents (measured by gel permeation chromatography) and having a structure represented by the following Formula (confirmed by ¹H NMR analysis)

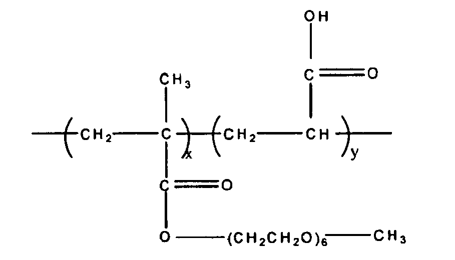

wherein x and y are an integer of 1 or more, and an average adduct mole number of oxyethylene is 6.

**Comparative Examples 2 to 5**

Polymers for ultra-high strength concrete admixture (C-2) to (C-5) were prepared in the same manner as Comparative Example 1 using a monomer composition as set forth in Table 1 below.

**Comparative Example 6**

100g of polyethyleneglycol (mole number of oxyethylene added: 6) and 2.05g of hexamethylene diisocyanate were reacted at 170°C for 5 hours. The weight average molecular weight of the resulting mixture was measured by gel permeation chromatography. As a result, a polymer for ultra-high strength concrete admixture (C-6) having a weight average molecular weight of 85,000 having a structure represented by the following Formula (confirmed by ¹H NMR analysis) was obtained.

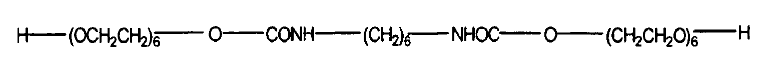

**Table 1**

| | Copolymer No. | Composition ratio of copolymer (% by weight) | Initiator | Solvent | Weight average molecular weight |
|---|---|---|---|---|---|
| Ex. 1 | S-1 | POEU-6/ AA = 83/17 | APS | Water | 31,000 |
| Ex.2 | S-2 | POEU-10/ AA = 77/23 | APS | Water | 36,600 |
| Ex.3 | S-3 | POEU-18/ AA = 75/25 | APS | Water | 37,500 |
| Ex.4 | S-4 | POEU-25/ AA = 70/30 | APS | Water | 38,000 |
| Ex.5 | S-5 | POEU-45/ AA = 68/32 | APS | Water | 41,000 |
| Comp. Ex.1 | C-1 | MPEG-6/ AA = 83/17 | APS | Water | 27,000 |
| Comp. Ex.2 | C-2 | MPEG-10/AA = 77/23 | APS | Water | 29,000 |
| Comp. Ex. 3 | C-3 | MPEG-18/ AA = 75/25 | APS | Water | 30,600 |
| Comp. Ex.4 | C-4 | MPEG-25/ AA = 70/30 | APS | Water | 36,500 |
| Comp. Ex. 5 | C-5 | MPEG-45/ AA = 68/32 | APS | Water | 41,300 |
| Comp. Ex. 6 | C-6 | PEG-6/ HMDI = 97/3 | | | |

**POEU-6, POEU-10, POEU-18, POEU-25, POEU-45:** unsaturated (meth)poly oxyethylene urethane compound (a) (average adduct mole numbers of urethane derivative-oxyethylene are 6, 10, 18, 25 and 45)

**MPEG-6, MPEG-10, MPEG-18, MPEG-25, MPEG-45:** unsaturated poly methoxypolyethyleneglycol mono methacrylate (b) (average adduct mole numbers of ethyleneoxide are 6, 10, 18, 25 and 45)

**PEG-6:** polyethyleneglycol (average adduct mole number of ethyleneoxide is 6)

**AA:** acrylic acid

**APS:** ammonium persulfate

**HDMI:** hexamethylene diisocyanate

The polymers of Example 4 (represented by (A)), Comparative Example 4 (represented by (B)), and Comparative Example 6 (represented by (C)) are shown in Table 1.

Experimental Example 1: Measurement of polymer zeta potential

The zeta potential of the polymers prepared in Examples 1 to 5 and Comparative Examples 1 to 5 was measured with a zeta potential analyzer.

The measurement of zeta potential was carried out at pH 6.0 using a Zetasizer Nano ZS apparatus (Malvern, GB). The zeta potential of the polymers prepared in Examples 1 to 5 and Comparative Examples 1 to 5 are shown in Table 2 below:

**Table 2**

| **Ex. No. (Copolymer No.)** | **Zeta potential (mV)** |
|---|---|
| Ex.1 (S-1) | -2.9 |
| Ex. 2 (S-2) | -2.9 |
| Ex. 3(S-3) | -3.2 |
| Ex. 4(S-4) | -3.8 |
| Ex. 5(S-5) | -4.2 |
| Comp. Ex. 1(C-1) | -2.3 |
| Comp. Ex. 2(C-2) | -2.4 |
| Comp. Ex. 3(C-3) | -2.5 |
| Comp. Ex. 4(C-4) | -2.6 |
| Comp. Ex. 5(C-5) | -2.8 |
| Comp. Ex. 6(C-6) | -0.4 |

As can be seen from Table 2 above, the zeta potential of the polymers prepared in Examples 1 to 5 is higher than those of polymers prepared in Comparative Example 1 to 6. This is the reason that the polymers of Examples 1 to 5 have urethane derivatives exhibiting electron donating ability and thus stronger zeta potential in urethane derivative-polyoxyalkylene chains in side chains thereof. For this reason, the polymers obtained using unsaturated (meth)polyoxyalkylene urethane compound (a), prepared in Examples 1 to 5, exhibited superior absoption ability on the surface of cement particles, as compared to polymers obtained in Comparative Examples 1 to 5.

Experimental Example 2: Analysis of total organic carbon in polymer

To evaluate absorption ability on cement particles with the passage of time of the polymers prepared in Examples 1 to 5 and Comparative Examples 1 to 6, total organic carbon was analyzed using a total organic carbon (TOC) content analyzer.

The total organic carbon analysis was carried out by measuring non-purgeable organic carbon (NPOC) using a Sievers InnovOx (GE, US). A paste test was carried out under the following conditions.

Water/cement: 150%

Cement (Hanil(KOREA), OPC): 700g

Admixture amount used : 8.4g (1.2% of Cement content)

Stirring time : 120 sec

Measurement interval : total 120 min with an interval of 30 min

A supernatant was collected from the resulting cement composition obtained under the conditions through a centrifugal separator and foreign maerials present therein were removed through a 0.45 µm filter. The residue was subjected to organic carbon measurement.

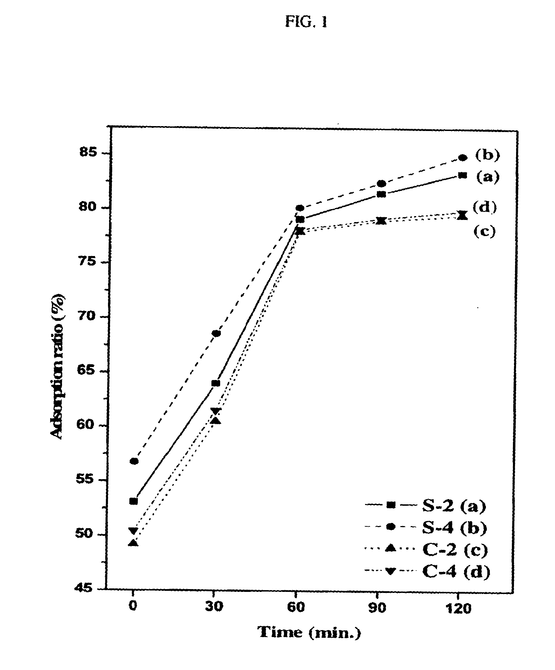

As can be seen from FIG. 1, as a result of total organic carbon measurement, polymers for ultra-high strength concrete admixture prepared in Examples 2 (represented by (a)) and 4 (represented by (c)) exhibited high early absorption speed and increased absorption amount with the passage of time.

On the other hand, polymers for ultra-high strength concrete admixture prepared in Comparative Examples 2 (represented by (c)) and 4 (represented by (d)), exhibited low early absorption speed and decreased absorption amount with the passage of time, as compared to polymers prepared in Examples 2 and 4.

The polymers prepared in Examples according to the present invention exhibit strong electron-attracting force of carboxylic acid groups present in the main chains of polymers, since urethane derivatives derived from the unsaturated (meth)polyoxyethylene urethane compound (a) present in side chains exert electron donating ability, as compared to polymers prepared in Comparative Example.

**Experimental Example 3: Transmission electron microscopy of polymer**

In order to characterize structural properties of the polymers prepared in Examples 1 to 5 and Comparative Examples 1 to 6, high-resolution transmission electron microscopy (HRTEM) was performed.

The high-resolution transmission electron microscopy was carried out using a JEM 2100F (JEOL, Japan) at an elevating voltage of 200 kV. For specimen measurement, a sample was placed on a 400 mesh Cu grid and was then measured by low-temperature transmission electron microscopy (Cryo-TEM method) using a low-tempeature grid holder in order to secure the fluidity of a material having strong fluidity and prevent thermal decoposition caused by electrons in polymers having weaker electron density.

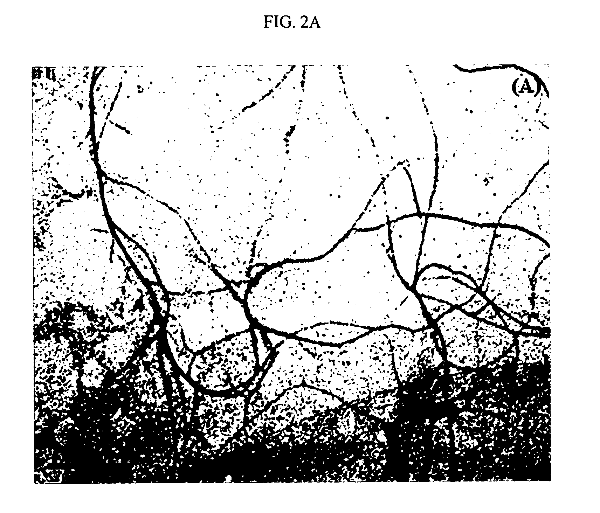

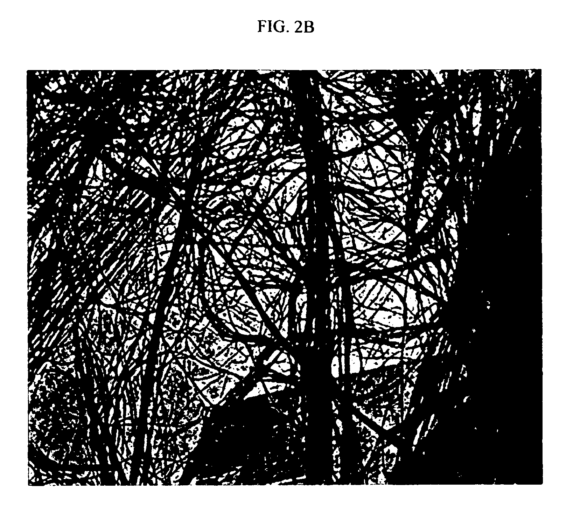

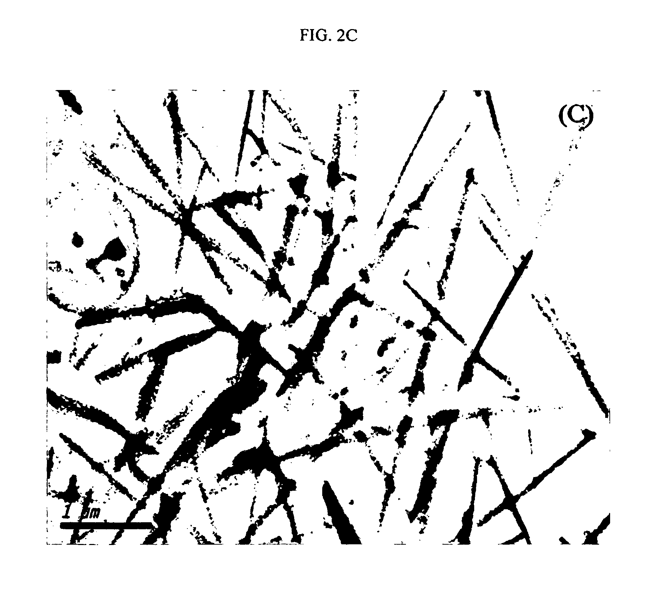

As can be seen from FIG. 2A, as a result of Cryo-TEM analysis, the polymer for ultra-high strength concrete admixture prepared in Example 4 is a linear polymer having a great number of side chains with a size of about 5 µm. The polymer has a small portion of twisted side chains and a length of about several hundereds of nanometers (nm). As shown in FIG. 2B, the polymer prepared in Example 4 has severely twisted side chains linked to main chains, as compared to the polymer for ultra-high strength concrete admixture, for comparison, prepared in Comparative Example 4, and is thus aggregated. In addition, as can be seen from FIG. 2C, the polymer for ultra-high strength concrete admixture prepared in Comparative Example 6 is a linear polymer having no side chain.

As a result, after the polymer prepared according to the present invention is absorbed on the surface of cement particles, side chains of the polymer are densely arranged by a predetemined distance, the hard chains of urethane derivative groups and soft chains of polyoxyalkylene groups are present in the side chains, and steric hindrance of the concrete composition is thus maximized and dispersion-maintenance ability in the concrete composition can be realized.

**Experimental Example 4: Concrete test**

Polymers for ultra-high strength concrete admixture obtained in Examples 1 to 5 and Comparative Examples 1 to 6 were evaluated as concrete admixtures. The results thus obtained are shown in Table 3. Concrete test piece specimens were subjected to strength testing. The results thus obtained are shown in Table 4. In addition, the concrete admixture used herein is composed of a polycarbonic acid dispersant and a copolymer prepared by an associated company of the present applicant in a predetermined ratio of 6:4 and the concrete test was carried out under the following conditions.

**Table 3**

| Copolymer No | Conditions of concrete with water-reducing ability and dispersion-maintenance ability | | | | Air content (%) |
|---|---|---|---|---|---|
| | Immediately | 30 min | 60 min | 90 min | |
| S-1 | 57 | 54 | 52 | 50 | 3.0 |
| S-2 | 55 | 57 | 56 | 55 | 2.7 |
| S-3 | 56 | 55 | 54 | 54 | 2.7 |
| S-4 | 54 | 56 | 56 | 55 | 2.4 |
| S-5 | 54 | 58 | 55 | 54 | 2.2 |
| C-1 | 54 | 48 | 40 | - | 2.9 |
| C-2 | 57 | 50 | 42 | - | 2.7 |
| C-3 | 56 | 46 | 39 | - | 2.7 |
| C-4 | 54 | 44 | 39 | - | 2.7 |
| C-5 | 55 | 45 | 40 | - | 2.7 |
| C-6 | 53 | 41 | - | - | 2.6 |

**Concrete test conditions**

Tapping water: 130 kg/m'

Cement (Hanil(KOREA), OPC): 448 kg/m³

Water/cement: 22%

Fine powder: Fly ash 89 kg/m', Silica fume 53 kg/m'

Fine-particle aggregator: fine sand of 277 kg/m', ground sand of 508 kg/m'

Coarse-particle aggregator: 25mm gravel 974 kg/m'

Admixture content: 1.0% (admixture content is increased to 1.2% in order to uniformize early dispersing ability in Comparative Examples 1 to 5 and a defoaming agent is added in a small amount of 0.12% of the admixture content)

Air entraining admixture content : 0.1 % of the admixture content

The ingredients were mixed in a forced pan mixer for 120 sec.

Initial slump flow was measured at 50±5cm immediatedly after mixing.

**Table 4**

| Copolymer No. | Compressive strength (MPa) | | |
|---|---|---|---|
| | 3 days | 7 days | 28 days |
| S-1 | 61.2 | 73.3 | 94.1 |
| S-2 | 60.8 | 73.3 | 95.2 |
| S-3 | 61.5 | 74.2 | 95.8 |
| S-4 | 62.3 | 74.8 | 97.2 |
| S-5 | 63.4 | 77.2 | 98.7 |
| C-1 | 55.3 | 70.6 | 83.1 |
| C-2 | 56.7 | 68.9 | 86.4 |
| C-3 | 57.3 | 69.0 | 88.5 |
| C-4 | 56.4 | 69.8 | 89.4 |
| C-5 | 56.2 | 70.2 | 90.1 |
| C-6 | 54.2 | 68.4 | 84.7 |

As can be seen from Table 3, concrete admixtures using the polymers (S-1 to S-5) prepared in Examples 1 to 5 to exhibit equivalent or similar initial dispersibility are added in small amounts, as compared to concrete admixtures using polymers (C-1 to C-5) prepared in Comparative Examples 1 to 6, which means that the polymer prepared according to the present invention used as a concrete admixture exhibited superior water-reducing ability and improved dispersion-maintenance ability. This is the reason that urethane derivative-polyethylene glycol chains acting as side chains in the polymer prepared according to the present invention exhibit better steric hindrance in a strong alkaline slurry state than methoxy polyethyleneglycol chains in conventional polymers for concrete admixture, thus imparting dispersion-maintenance ability to the concrete composition. Accordingly, when the polymers (S-1 to S-5) prepared in Examples 1 to 5 are directly used as concrete admixtures, mortar is not adsorbed on the surface of a kneading paddle during concrete kneading using the kneading paddle and workability is excellent with the passage of time.

As can be seen from Table 4, under equivalent water/cement ratio and aggregate conditions, the case wherein the polymers S-1 to S-5 prepared in Examples 1 to 5 are used as concrete admixtures provides superior strength to the prepared concrete, as compared to the case wherein concrete admixtures comprising polymers (C-1 to C-6) prepared according to Comparative Examples 1 to 6 are used. This means that the polymers obtained in Examples 1 to 5 efficiently impart considerably high strength to the concrete composition.

When the polymers prepared in Examples 1 to 5 and Comparative Examples 1 to 6 are used as concrete admixtures, polymers using the unsaturated (meth)polyoxyalkylene urethane compound and unsaturated non-inonic organic monomers exhibit higher initial dispersability and dispersion-maintenance ability with the passage of time than polymers using methoxypolyethylglycol methacrylate unsaturated non-ionic organic monomers, and improves strength as well as workability of the concrete composition. Accordingly, a polymer useful for ultra-high strength concrete admixture with high strength and superior durability may be provided.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A polymer of weight average molecular weight (Mw) of 5,000 to 150,000 for ultra-high strength concrete admixture, prepared from 30 to 95% by weight of an unsaturated (meth)polyoxyalkylene urethane compound (a) represented by Formula I below: 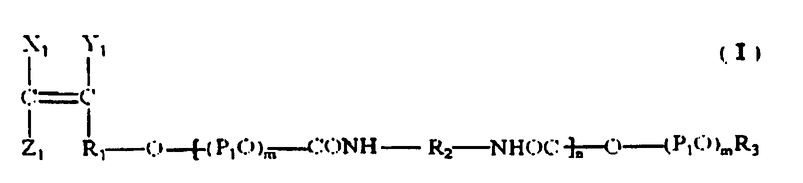
wherein X₁, Y₁ and Z₁ are each independently identical or different and are selected from the group consisting of hydrogen (-H), a methyl group (-CH₃) and a carboxylic group (-COOH);
R₁ represents a C₁-C₆ hydrocarbon group or a ketone group;
R₂ represents a C₆ aromatic group, a C₃-C₁₂ cyclic hydrocarbon group or a C₁-C₆ hydrocarbon group;
R₃ represents hydrogen (-H) or a C₁-C₆ hydrocarbon group; P₁O represents at least one C₂-C₂₀ oxyalkylene group;
m is an integer of 2 to 100, which is an average adduct mole number of the oxyalkylene group; and
n is an integer of 3 to 150, which is an average adduct mole number of repeat units, and
5 to 70% by weight of an unsaturated anionic organic monomer (b) represented by Formula II below: 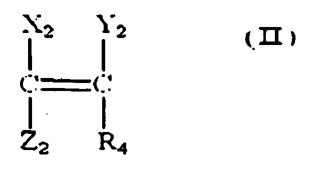
wherein X₂, Y₂ and Z₂ are each independently identical or different and are selected from the group consisting of hydrogen (-H), a methyl group (-CH₃) and a carboxylic group (-COOH), in which one of X₂, Y₂ and Z₂ is hydrogen; and
R₄ represents a carboxylic group (-COOH) or a nitrile group (-CN)
**characterized in that**
Compound (a) represented by Formula I being obtainable by the urethane derivative and a diol which are added to obtain a urethane compound and the resulting urethane compound is reacted with unsaturated organic acid or unsaturated alcohol.

2. The polymer according to claim 1, wherein the polymer has a zeta potential of -2.9 mV to -5 mV.

3. The polymer according to claim 1, wherein, of the unsaturated (meth)polyoxyalkylene urethane compound represented by Formula I, the unsaturated organic acid providing an unsaturated group is selected from the group consisting of unsaturated monocarboxylic acid monomers, unsaturated dicarboxylic acid monomers and combinations thereof.

4. The polymer according to claim 3, wherein the unsaturated monocarboxylic acid monomer is selected from the group consisting of acrylic acid, methacrylic acid and combinations thereof.

5. The polymer according to claim 3, wherein the unsaturated dicarboxylic acid monomer is selected from the group consisting of: maleic acid, itaconic acid, citraconic acid and fumaric acid; mono-valent metal salts, bi-valent metal salts, ammonium salts and organic amine salts thereof; and anhydrides thereof.

6. The polymer according to claim 1, wherein, of the unsaturated (meth)polyoxyalkylene urethane compound represented by Formula I, the unsaturated alcohol providing an unsaturated group is selected from the group consisting of vinyl alcohol, (meth)allyl alcohol, 3-buten-1-ol, isoprene alcohol, 3-methyl-2-buten-1-ol, 2-methyl-3-buten-1-ol, 2-methyl-3-buten-2-ol and 2-methyl-2-buten-1-ol and combinations thereof.

7. The polymer according to claim 1, wherein, of the unsaturated (meth)polyoxyalkylene urethane compound represented by Formula I, the diisocyanate providing a urethane group is selected from the group consisting of 2,4-toluene diisocyanate, methylenediphenyl-4,4'-diisocyanate, tetramethyl-1,3-xylene diisocyanate, para-phenylene diisocyanate, 1,6-hexamethylene diisocyanate, 1,5-naphthalene diisocyanate, isoporon diisocyanate, cyclohexylmethane diisocyanate and combinations thereof.

8. The polymer according to claim 1, wherein, of the unsaturated (meth)polyoxyalkylene urethane compound represented by Formula I, the diol used for polyoxyalkylene adduct is selected from the group consisting of ethylene glycol, propylene glycol, butylene glycol, isobutylene glycol and combinations thereof.

9. The polymer according to claim 1, wherein, of the unsaturated (meth)polyoxyalkylene urethane compound (a) represented by Formula I, an adduct mole number of the urethane derivative-polyoxyalkylene group m is 6 to 100.

10. The polymer according to claim 1, wherein the unsaturated anionic organic monomer (b) represented by Formula II is selected from the group consisting of unsaturated monocarboxylic acid monomers, unsaturated dicarboxylic acid monomers and unsaturated nitrile monomers.

11. The polymer according to claim 10, wherein the unsaturated monocarboxylic acid monomer is selected from the group consisting of acrylic acid, methacrylic acid and combinations thereof.

12. The polymer according to claim 10, wherein the unsaturated dicarboxylic acid monomer is selected from the group consisting of: maleic acid, itaconic acid, citraconic acid and fumaric acid; mono-valent metal salts, bi-valent metal salts, ammonium salts and organic amine salts thereof; and anhydrides thereof.

13. The polymer according to claim 10, wherein the unsaturated nitrile monomer is acrylonitrile.

14. A concrete admixture comprising the polymer according to any one of claims 1 to 13.

15. The concrete admixture according to claim 14, further comprising:
5 to 100 parts by weight of a second concrete admixture with respect to 100 parts by weight of the concrete admixture.

16. The concrete admixture according to claim 15, wherein the polymer of the concrete admixture has a linear side chain having an average length of 0.5 µm to 5 µm.

17. The concrete admixture according to claim 16, wherein the side chain length is 10 nm to 500 nm.

18. A method for preparing a polymer for concrete admixture comprising:
i) charging a solvent into a reactor;
ii) dropwise adding at least one unsaturated (meth)polyoxyalkylene urethane compound (a), at least one unsaturated anionic organic monomer (b), wherein compounds (a) and (b) are as defined in claim 1;
iii) polymerizing the resulting reaction mixture.

19. The method according to claim 18, further comprising: neutralizing the resulting polymer with an alkali.

20. A method for preparing a polymer for concrete admixture comprising:
i) charging at least one compound or monomer of at least one unsaturated (meth)polyoxyalkylene urethane compound (a) and at least one unsaturated anionic organic monomer (b) together with a solvent into a reactor, wherein compounds (a) and (b) are as defined in claim 1;
ii) dropwise adding the remaining compound or monomer and a polymerization initiator (C) to the reactor; and
iii) polymerizing the resulting reaction mixture.

21. The method according to claim 20, further comprising: neutralizing the resulting polymer with an alkali.

## Patentansprüche

1. Polymer mit einem durchschnittlichen Molekulargewicht (Mw) von 5000 bis 150000 für einen Zuschlag für ultrahochfesten Beton, hergestellt aus 30 bis 95 Gewichtsprozent einer ungesättigten (Meth)polyoxyalkylen-Urethan-Verbindung (a), repräsentiert durch die unten gezeigte Formel I 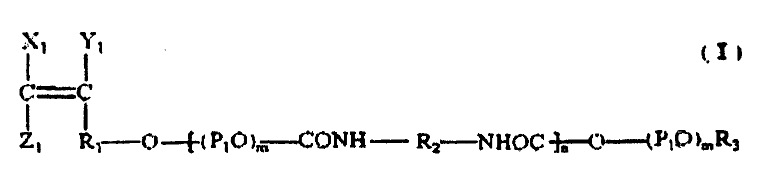 wobei
X₁, Y₁ und Z₁ unabhängig voneinander identisch oder unterschiedlich sind und ausgewählt werden aus der Gruppe bestehend aus Wasserstoff (-H), einer Methylgruppe (-CH₃) und einer Carboxygruppe (-COOH);
R₁ eine C₁-C₆ Kohlenwasserstoffgruppe oder eine Ketogruppe repräsentiert;
R₂ eine C₆ aromatische Gruppe, eine C₃-C₁₂-zyklische Kohlenwasserstoffgruppe oder eine C₁-C₆ Kohlenwasserstoffgruppe repräsentiert;
R₃ Wasserstoff (-H) oder eine C₁-C₆ Kohlenwasserstoffgruppe repräsentiert
P₁O mindestens eine C₂-C₂₀ Oxyalkylen-Gruppe repräsentiert; m eine Variable von 2 bis 100 darstellt, welche eine durchschnittliche molare Adduktzahl der Oxyalkylen-Gruppe darstellt;
n eine Variable ist von 3 bis 150, welche eine durchschnittliche molare Adduktzahl an Wiederholungseinheiten darstellt, und
5 bis 70 Gewichtsprozent eines ungesättigten anionischen, organischen Monomers (b), das durch unten dargestellte Formel II repräsentiert wird: 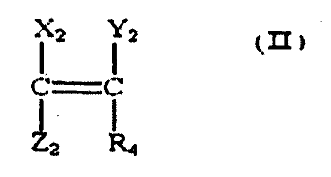
wobei X₂, Y₂, Z₂ jeweils unabhängig voneinander identisch oder unterschiedlich sind und ausgewählt werden aus der Gruppe bestehend aus Wasserstoff (-H), einer Methylgruppe (-CH₃) und einer Carboxygruppe (-COOH), in welcher eine der Gruppen X₂, Y₂ und Z₂ Wasserstoff ist; und
R₄ eine Carboxygruppe (-COOH) oder eine Nitrilgruppe (-CN) repräsentiert
**dadurch kennzeichnet, dass**
die durch Formel I repräsentierte Verbindung (a) erhältlich ist über das Urethanderivat und ein Diol, welche zusammen gegeben werden, um eine Urethanverbindung zu erhalten, und wobei die resultierende Urethanverbindung mit ungesättigter organischer Säure oder ungesättigtem Alkohol umgesetzt wird.

2. Das Polymer gemäß Anspruch 1, wobei das Polymer ein Zeta-Potential von -2,9 mV bis -5 mV aufweist.

3. Das Polymer gemäß Anspruch 1, wobei in Bezug auf die ungesättigte (Meth)polyoxyalkylen-Urethan-Verbindung, die durch Formel I repräsentiert wird, die ungesättigte organische Säure, die eine ungesättigte Gruppe bereitstellt, ausgewählt wird aus der Gruppe bestehend aus ungesättigten Monocarbonsäuremonomeren, ungesättigten Dicarbonsäurenmonomeren und Kombinationen daraus.

4. Das Polymer gemäß Anspruch 3, wobei das ungesättigte Monocarbonsäuremonomer ausgewählt wird aus der Gruppe bestehend aus Acrylsäure, Methacrylsäure und Kombinationen daraus.

5. Das Polymer gemäß Anspruch 3, wobei das ungesättigte Dicarbonsäuremonomer ausgewählt wird aus der Gruppe bestehend aus: Maleinsäure, Itaconsäure, Citracon-Säure und Fumarsäure; monovalenten Metallsalzen, bivalenten Metallsalzen, Ammonionsalzen und organischen Aminosalzen daraus; und Anhydriden daraus.

6. Das Polymer gemäß Anspruch 1, wobei in Bezug auf die ungesättigte (Meth)polyoxyalkylen-Urethan-Verbindung, die durch Formel I repräsentiert wird, der ungesättigte Alkohol, der eine ungesättigte Gruppe bereitstellt, ausgewählt wird aus der Gruppe bestehend aus Vinylalkohol, (Meth)allyl-Alkohol, 3-Buten-1-ol, Isopren-Alkohol, 3-Methyl-2-Buten-1-ol, 2-Methyl-3-Buten-1-ol, 2-Methyl-3-Buten-2-ol und 2-Methyl-2-Buten-1-ol und Kombinationen daraus.

7. Das Polymer gemäß Anspruch 1, wobei in Bezug auf die ungesättigte (Meth)polyoxyalkylen-Urethan-Verbindung, die durch Formel I repräsentiert wird, das Diisocyanat, das eine Urethangruppe bereitstellt, ausgewählt wird aus der Gruppe bestehend aus 2,4-Toluol-Diisocyanat, Methylendiphenyl-4,4'-Diisocyanat, Tetramethyl-1,3-Xylen-Diisocyanat, para-Phenylen-Diisocyanat, 1,6-HexamethylenDiisocyanat, 1,5-Naphtalen-Diisocyanat, Isoporon-Diisocyanat, Cyclohexylmethan-Diisocyanat und Kombinationen daraus.

8. Das Polymer gemäß Anspruch 1, wobei in Bezug auf die ungesättigte (Meth)polyoxyalkylen-Urethan-Verbindung, die durch Formel I repräsentiert wird, das für das Polyoxyalkylenaddukt verwendete Diol ausgewählt wird aus der Gruppe bestehend aus Ethylenglykol, Propylenglykol, Butylenglykol, Isobutylenglykol und Kombinationen daraus.

9. Das Polymer gemäß Anspruch 1, wobei in Bezug auf die ungesättigte (Meth)polyoxyalkylen-Urethan-Verbindung (a), die durch Formel I repräsentiert wird, eine molare Adduktzahl m der Urethan-Derivate-Polyoxyalkylengruppe 6 bis 100 beträgt.

10. Das Polymer gemäß Anspruch 1, wobei das ungesättigte anionische organische Monomer (b), das durch Formel II repräsentiert wird, ausgewählt wird aus der Gruppe bestehend aus ungesättigten Monocarbonsäuremonomeren, ungesättigten Dicarbonsäurenmonomeren und ungesättigten Nitril-Monomeren.

11. Das Polymer gemäß Anspruch 10, wobei das ungesättigte Monocarbonsäuremonomer ausgewählt wird aus der Gruppe bestehend aus Acrylsäure, Methacrylsäure und Kombinationen daraus.

12. Das Polymer gemäß Anspruch 10, wobei das ungesättigte Dicarbonsäurenmonomer ausgewählt wird aus der Gruppe bestehend aus: Maleinsäure, Itaconsäure, Citraconsäure und Fumarsäure; monovalenten Metallsalzen, bivalenten Metallsalzen, Ammoniumsalzen und organischen Aminosalzen daraus; und Anhydriden daraus.

13. Das Polymer gemäß Anspruch 10, wobei das ungesättigte Nitrilmonomer ein Acrylnitril ist.

14. Ein Betonzuschlag umfassend das Polymer gemäß einem der Ansprüche 1 bis 13.

15. Der Betonzuschlag gemäß Anspruch 14, weiterhin umfassend:
5 bis 100 Gewichtsanteile eines zweiten Betonzuschlags in Bezug auf 100 Gewichtsanteile des Betonzuschlags.

16. Der Betonzuschlag gemäß Anspruch 15, wobei das Polymer des Betonzuschlags eine lineare Seitenkette mit einer durchschnittlichen Länge von 0,5 µm bis 5 µm aufweist.

17. Der Betonzuschlag gemäß Anspruch 16, wobei die Seitenkettenlänge 10 nm bis 500 nm beträgt.

18. Ein Verfahren zur Herstellung eines Polymers für einen Betonzuschlag, umfassend:
i) Einfüllen eines Lösungsmittels in einen Reaktor;
ii) Tropfenweise Hinzugabe mindestens einer ungesättigten (Meth)polyoxyalkylen-Urethan-Verbindung (a), mindestens einem ungesättigten anionischen organischen Monomer (b), wobei die Verbindungen (a) und (b) wie in Anspruch 1 definiert sind;
iii) Polymerisieren der erhaltenen Reaktionsmischung.

19. Das Verfahren gemäß Anspruch 18, weiterhin umfassend: Neutralisieren des erhaltenen Polymers mit einer Lauge.

20. Ein Verfahren zur Herstellung eines Polymers für Betonzuschläge, umfassend:
i) Einfüllen mindestens einer Verbindung oder eines Monomers aus mindestens einer ungesättigten (Meth)polyoxyalkylen-Urethan-Verbindung (a) und mindestens einem ungesättigten anionischen organischen Monomer (b) zusammen mit einem Lösungsmittel in einen Reaktor, wobei die Verbindungen (a) und (b) wie in Anspruch 1 definiert sind;
ii) Tropfenweise Hinzugabe der verbleibenden Verbindung oder des Monomers und eines Polymerisations-Initiators (C) in den Reaktor; und
iii) Polymerisierung der erhaltenen Reaktionsmischung.

21. Das Verfahren gemäß Anspruch 20, weiterhin umfassend: Neutralisieren des erhaltenen Polymers mit einer Lauge.

## Revendications

1. Polymère de masse moléculaire moyenne en masse (Mw) de 5 000 à 150 000 pour un mélange de béton de résistance ultra-élevée, préparé à partir de 30 à 95 % en masse d'un composé de (méth)polyoxyalkylène uréthane insaturé (a) représenté par la formule I ci-dessous : 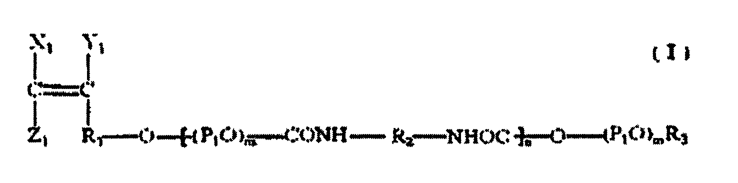
où X₁, Y₁ et Z₁ sont chacun indépendamment identiques ou différents et sont choisis dans le groupe constitué de l'hydrogène (-H), d'un groupe méthyle (-CH₃) et d'un groupe carboxylique (-COOH) ;
R₁ représente un groupe hydrocarboné en C₁-C₆ ou un groupe cétone ;
R₂ représente un groupe aromatique en C₆, un groupe hydrocarboné cyclique en C₃-C₁₂ ou un groupe hydrocarboné en C₁-C₆ ;
R₃ représente l'hydrogène (-H) ou un groupe hydrocarboné en C₁-C₆ ;
P₁O représente au moins un groupe oxyalkylène en C₂-C₂₀ ;
m est un nombre entier de 2 à 100, lequel est un nombre moyen de moles de produit d'addition du groupe oxyalkylène ; et
n est un nombre entier de 3 à 150, lequel est un nombre moyen de moles de produit d'addition d'unités répétitives, et
de 5 à 70 % en masse d'un monomère organique anionique insaturé (b) représenté par la formule II ci-dessous : 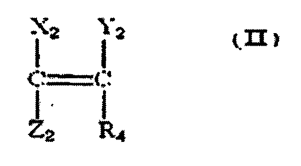
où X₂, Y₂ et Z₂ sont chacun indépendamment identiques ou différents et sont choisis dans le groupe constitué de l'hydrogène (-H), d'un groupe méthyle (-CH₃) et d'un groupe carboxylique (-COOH), dans lequel un de X₂, Y₂ et Z₂ est l'hydrogène ;
et
R₄ représente un groupe carboxylique (-COOH) ou un groupe nitrile (-CN)
**caractérisé en ce que**
le composé (a) représenté par la formule I peut être obtenu par le dérivé d'uréthane et un diol qui sont ajoutés pour obtenir un composé d'uréthane et le composé d'uréthane résultant réagit avec un acide organique insaturé ou un alcool insaturé.

2. Polymère selon la revendication 1, dans lequel le polymère présente un potentiel zéta de -2,9 mV à -5 mV.

3. Polymère selon la revendication 1, dans lequel, pour le composé de (méth)polyoxyalkylène uréthane insaturé représenté par la formule I, l'acide organique insaturé fournissant un groupe insaturé est choisi dans le groupe constitué par des monomères d'acides monocarboxyliques insaturés, des monomères d'acides dicarboxyliques insaturés et des combinaisons de ceux-ci.

4. Polymère selon la revendication 3, dans lequel le monomère d'acide monocarboxylique insaturé est choisi dans le groupe constitué par l'acide acrylique, l'acide méthacrylique et des combinaisons de ceux-ci.

5. Polymère selon la revendication 3, dans lequel le monomère d'acide dicarboxylique insaturé est choisi dans le groupe constitué par : l'acide maléique, l'acide itaconique, l'acide citraconique et l'acide fumarique ; des sels de métaux mono-valents, des sels de métaux bi-valents, des sels d'ammonium et des sels d'amines organiques de ceux-ci ; et des anhydrides de ceux-ci.

6. Polymère selon la revendication 1, dans lequel, pour le composé de (méth)polyoxyalkylène uréthane insaturé représenté par la formule I, l'alcool insaturé fournissant un groupe insaturé est choisi dans le groupe constitué de l'alcool vinylique, de l'alcool (méth)allylique, du 3-butèn-1-ol, de l'alcool d'isoprène, du 3-méthyl-2-butèn-1-ol, du 2-méthyl-3-butèn-1-ol, du 2-méthyl-3-butèn-2-ol et du 2-méthyl-2-butèn-1-ol et de combinaisons de ceux-ci.

7. Polymère selon la revendication 1, dans lequel, pour le composé de (méth)polyoxyalkylène uréthane insaturé représenté par la formule I, le diisocyanate fournissant un groupe uréthane est choisi dans le groupe constitué du diisocyanate de 2,4-toluène, du méthylènediphényl-4,4'-diisocyanate, du diisocyanate de tétraméthyl-1,3-xylène, du diisocyanate, de para-phénylène, du diisocyanate de 1,6-hexaméthylène, du diisocyanate de 1,5-naphtalène, du diisocyanate d'isophorone, du diisocyanate de cyclohexylméthane et de combinaisons de ceux-ci.

8. Polymère selon la revendication 1, dans lequel, pour le composé de (méth)polyoxyalkylène uréthane insaturé représenté par la formule I, le diol utilisé pour le produit d'addition de polyoxyalkylène est choisi dans le groupe constitué par l'éthylèneglycol, le propylèneglycol, le butylèneglycol, l'isobutylèneglycol et des combinaisons de ceux-ci.

9. Polymère selon la revendication 1, dans lequel, pour le composé de (méth)polyoxyalkylène uréthane insaturé (a) représenté par la formule I, un nombre de moles de produit d'addition du groupe polyoxyalkène-dérivé uréthane m est de 6 à 100.

10. Polymère selon la revendication 1, dans lequel le monomère organique anionique insaturé (b) représenté par la formule II est choisi dans le groupe constitué de monomères d'acides monocarboxyliques insaturés, de monomères d'acides dicarboxyliques insaturés et de monomères de nitriles insaturés.

11. Polymère selon la revendication 10, dans lequel le monomère d'acide monocarboxylique insaturé est choisi dans le groupe constitué de l'acide acrylique, de l'acide méthacrylique et de combinaisons de ceux-ci.

12. Polymère selon la revendication 10, dans lequel le monomère d'acide dicarboxylique insaturé est choisi dans le groupe constitué par : l'acide maléique, l'acide itaconique, l'acide citraconique et l'acide fumarique ; des sels de métaux monovalents, des sels de métaux bivalents, des sels d'ammonium et des sels d'amines organiques de ceux-ci ; et des anhydrides de ceux-ci.

13. Polymère selon la revendication 10, dans lequel le monomère de nitrile insaturé est l'acrylonitrile.

14. Mélange de béton comprenant le polymère selon l'une quelconque des revendications 1 à 13.

15. Mélange de béton selon la revendication 14, comprenant de plus :
de 5 à 100 parties en masse d'un second mélange de béton par rapport à 100 parties en masse du mélange de béton.

16. Mélange de béton selon la revendication 15, dans lequel le polymère du mélange de béton présente une chaîne latérale linéaire ayant une longueur moyenne de 0,5 µm à 5 µm.

17. Mélange de béton selon la revendication 16, dans lequel la longueur de chaîne latérale est de 10 nm à 500 nm.

18. Procédé de préparation d'un polymère pour un mélange de béton comprenant :
i) la charge d'un solvant dans un réacteur ;
ii) l'addition goutte à goutte d'au moins un composé de (méth)polyoxyalkylène uréthane insaturé (a), d'au moins un monomère organique anionique insaturé (b), dans lequel les composés (a) et (b) sont comme définis dans la revendication 1 ;
iii) la polymérisation du mélange réactionnel résultant.

19. Procédé selon la revendication 18, comprenant de plus : la neutralisation du polymère résultant avec un alcali.

20. Procédé de préparation d'un polymère pour un mélange de béton comprenant :
i) la charge d'au moins un composé ou monomère d'au moins un composé de (méth)polyoxyalkylène uréthane insaturé (a) et d'au moins un monomère organique anionique insaturé (b) avec un solvant dans un réacteur, dans lequel les composés (a) et (b) sont comme définis dans la revendication 1 ;
ii) l'addition goutte à goutte du composé ou du monomère restant et d'un initiateur de polymérisation (c) dans le réacteur ; et
iii) la polymérisation du mélange réactionnel résultant.

21. Procédé selon la revendication 20, comprenant de plus : la neutralisation du polymère résultant avec un alcali.
